# EUROPÄISCHE PATENTSCHRIFT

(11) **EP 3 803 096 B1**
(45) Veröffentlichungstag und Bekanntmachung des Hinweises auf die Patenterteilung: **17.08.2022**
(21) Anmeldenummer: 19729656.9
(22) Anmeldetag: 29.05.2019
(51) Int. Cl.: F02M 37/00, F02M 37/10, F16L 35/00

(54) **KRAFTSTOFFFÖRDEREINHEIT, KRAFTSTOFFFÖRDERSYSTEM UND FAHRZEUG**
FUEL DELIVERY UNIT, FUEL DELIVERY SYSTEM AND VEHICLE
UNITÉ D'ALIMENTATION EN CARBURANT, SYSTÈME D'ALIMENTATION EN CARBURANT ET VÉHICULE

(30) Priorität: 29.05.2018 DE 102018208480
(43) Veröffentlichungstag der Anmeldung: 14.04.2021
(73) Patentinhaber: Vitesco Technologies GmbH, 93055 Regensburg (DE)
(72) Erfinder: RAUBER, Jens, 65824 Schwalbach a. Ts. (DE); KOCH, Marcus, 65824 Schwalbach a. Ts. (DE); KOTZA, Ingo, 65824 Schwalbach a. Ts. (DE)
(74) Vertreter: Vitesco Technologies
(86) Internationale Anmeldenummer: PCT/EP2019/063987
(87) Internationale Veröffentlichungsnummer: WO 2019/229135

(56) Entgegenhaltungen:
- WO-A2-2009/068694
- DE-A1-102005 017 519

## Beschreibung

Die vorliegende Erfindung betrifft eine Kraftstofffördereinheit zur Verwendung innerhalb eines Kraftstofftanks eines Fahrzeugs, ein Kraftstofffördersystem mit einer solchen Kraftstofffördereinheit sowie ein Fahrzeug mit einem solchen Kraftstofffördersystem.

Eine solche Kraftstofffördereinheit umfasst bekanntlich einen an einer Wandung eines Kraftstofftanks angeordneten Schwalltopf, aus welchem ein flüssiger Kraftstoff mittels einer Kraftstoffpumpe zu einem Verbrennungsmotor gefördert wird, und einen eine Öffnung des Kraftstofftanks verschließenden Flansch, welcher gegenüber dem Schwalltopf über mindestens ein Abstützelement federnd vorgespannt ist. Dieses mindestens eine Abstützelement, welches mit dem Schwalltopf und dem Flansch gefügt ist, bildet dabei zugleich eine Verankerung zwischen dem Schwalltopf und dem Flansch.

Bei einem Fahrzeugaufprall kann sich der Kraftstofftank aufgrund einer in ihn eingebrachten kinetischen Energie bis zur Kraftstofffördereinheit derart verformen, dass sich die Verankerung zwischen dem Schwalltopf und dem Flansch löst. Dies kann zur Folge haben, dass eine zum Flansch führende Kraftstoffvorlaufleitung oder ein mit der Kraftstoffvorlaufleitung verbundener Anschlussstutzen am Flansch reißt. Ist zudem eine vom Kraftstofftank wegführende Kraftstoffleitung undicht, kann der Kraftstoff in einer Lage eines Fahrzeugs, etwa nach einem Fahrzeugüberschlag, in eine Umgebung auslaufen.

Die Druckschrift DE 10 2005 017 519 A1 offenbart eine Kraftstofffördervorrichtung mit einem Flansch, wobei der Flansch einen Fluidanschluss aufweist, der eine Sollbruchstelle umfasst. Mittels der Sollbruchstelle wird verhindert, dass der Flansch beschädigt wird, wenn eine Fluidleitung eine Zugkraft auf den Fluidanschluss überträgt.

Aufgabe der vorliegenden Erfindung ist es, eine verbesserte Kraftstofffördereinheit der zuvor beschriebenen Art bereitzustellen.

Diese Aufgabe wird durch den Anspruch 1 gelöst, der eine Kraftstofffördereinheit zur Verwendung innerhalb eines Kraftstofftanks eines Fahrzeugs unter Schutz stellt. Es wird ferner ein Kraftstofffördersystem mit einer solchen Kraftstofffördereinheit unter Schutz gestellt (vgl. Anspruch 10). Ferner wird ein Fahrzeug mit einer solchen Kraftstofffördereinheit unter Schutz gestellt (vgl. Anspruch 11) . Vorteilhafte Ausführungsformen der Erfindung sind Gegenstand der Unteransprüche.

Es wird eine Kraftstofffördereinheit zur Verwendung innerhalb eines Kraftstofftanks eines Fahrzeugs vorgeschlagen. Die Kraftstofffördereinheit weist dabei auf:
- einen Schwalltopf zur Anordnung an einer Wandung des Kraftstofftanks, wobei im Schwalltopf eine Kraftstoffpumpe zur Förderung eines flüssigen Kraftstoffes aus dem Schwalltopf angeordnet ist,
- einen Flansch zur Anordnung in einer Öffnung des Kraftstofftanks,
- mindestens ein zwischen dem Schwalltopf und dem Flansch angeordnetes Abstützelement,
- eine flexible, als Vorlaufleitung fungierende Kraftstoffleitung, welche sich vom einem Bereich des Schwalltopfs bis zu einem Anschlussstutzen am Flansch erstreckt,
- einen Kabelbaum, welcher sich von der Kraftstoffpumpe bis zum Flansch erstreckt,
- mindestens ein flanschseitiges, einen ersten Krafteinleitungspunkt bildendes Haltemittel zur flanschseitigen Fixierung des Kabelbaums sowie
- mindestens ein schwalltopfseitiges, einen zweiten Krafteinleitungspunkt bildendes Haltemittel zur schwalltopfseitigen Fixierung des Kabelbaums.

Das flanschseitige und das schwalltopfseitige Haltemittel bilden dabei in Verbindung mit dem Kabelbaum eine Kraftaufnahmevorrichtung zum Schutz der Vorlaufleitung und des Anschlussstutzens bei einem Fahrzeugaufprall. Dabei ist die Kabelbaumlänge zwischen den Haltemitteln gegenüber der Länge der Vorlaufleitung kürzer, so dass beim Fahrzeugaufprall, durch den sich der Schwalltopf und der Flansch voneinander wegbewegen, die Kabelbaumlänge zwischen den Haltemitteln unter Zug stellbar ist, um eine auf die Kraftstofffördereinheit wirkende kinetische Energie aufzunehmen und dadurch abzubauen, ohne dass die Vorlaufleitung bzw. Kraftstoffvorlaufleitung oder der mit ihr verbundene Anschlussstutzen am Flansch abreißt.

Unter einer flanschseitigen und schwalltopfseitigen Fixierung des Kabelbaums ist dabei entweder eine klemmende Wirkung des jeweiligen Haltemittels zu verstehen, durch die eine Bewegung des Kabelbaums relativ zum jeweils zugeordneten Krafteinleitungspunkt verhindert wird, oder aber eine Wirkung, durch die eine Bewegung des Kabelbaums relativ zum jeweils zugeordneten Krafteinleitungspunkt erschwert wird.

Durch die Kraftaufnahmevorrichtung bleibt die Vorlaufleitung kraftlos oder nahezu kraftlos gestellt, oder es ist zumindest sichergestellt, dass selbst nach einem Abriss mindestens eines der Haltemittel die Vorlaufleitung unter Zug stellbar ist, ohne dass sie oder der mit ihr verbundene Anschlussstutzen am Flansch abreißt, weil die kinetische Energie soweit abgebaut ist, als dass die verbleibende kinetische Energie dafür nicht mehr ausreicht.

Durch die vorgeschlagene Kraftaufnahmevorrichtung lässt sich die beim Fahrzeugaufprall entstehende und auf die Kraftstofffördereinheit wirkende kinetische Energie bis zu einer gewissen Grenze aufnehmen und dadurch abbauen. Diese Grenze ist dabei abhängig von einer Auslegung der Haltemittel sowie des Kabelbaums. Sicherheitshalber wird vorgeschlagen, den Anschlussstutzen am Flansch möglichst kurz zu gestalten, um eine resultierende Zugbelastung auf den Anschlussstutzen zu reduzieren.

Nach einer Ausführungsform liegt/liegen dabei das flanschseitige und/oder das schwalltopfseitige Haltemittel zwischen den elektrischen Anschlüssen des Kabelbaums.

Schwalltopfseitig kann dabei ein Haltemittel fest am Schwalltopf und/oder in einem Bereich des Schwalltopfes in Gestalt zumindest eines losen Verbindungselements zwischen dem Kabelbaum und zumindest einer weiteren Kraftstoffleitung angebracht sein. Das lose Verbindungselement kann dabei z.B. zwischen dem Kabelbaum und einer ersten und zweiten Kraftstoffleitung angebracht sein, wobei die erste Kraftstoffleitung die Kraftstoffpumpe mit einem Kraftstofffeinfilter verbindet und wobei die zweite Kraftstoffleitung die Kraftstoffpumpe mit einer Saugstrahlpumpe verbindet. Auch flanschseitig kann ein Haltemittel fest am Flansch angebracht sein.

Nach einer Ausgestaltung kann das fest am Schwalltopf angebrachte Haltemittel und/oder das fest am Flansch angebrachte Haltemittel in Gestalt einer angeformten oder klemmend eingesetzten, fixierend wirkenden Halterung, etwa als Kunststoffhalterung ausgebildet sein. Die Halterung kann dabei ein offenes oder geschlossenes Profil aufweisen.

Alternativ dazu könnte auch ein loses Verbindungselement in Gestalt z.B. eines Kabelbinders, einer Verbindungsschelle etc. aus Kunststoff oder Metall im Sinne eines fest am Schwalltopf und/oder am Flansch angebrachten Haltemittels fungieren, sofern eine entsprechende Befestigungsmöglichkeit am Schwalltopf und/oder am Flansch vorgesehen wird, etwa in Gestalt eines offenen oder geschlossenen Profils oder aber in Gestalt von Aussparungen, durch die ein solch loses Verbindungselement, wie etwa ein Kabelbinder, eine Verbindungsschelle aus Kunststoff oder Metall und dergleichen mehr zur Befestigung hindurchführbar ist.

Nach einer weiteren Ausgestaltung kann das fest am Schwalltopf angebrachte Haltemittel an einer Wandung des Schwalltopfes oder in einem Bereich des Schwalltopfes, z.B. an einem Pumpenhalter vorgesehen sein.

Nach einer weiteren Ausgestaltung können flanschseitig und/oder schwalltopfseitig zumindest zwei, je einen Krafteinleitungspunkt bildende Haltemittel vorgesehen sein, um eine gestufte Kraftaufnahme bzw. Energieaufnahme zu ermöglichen.

Es wird ferner ein Kraftstofffördersystem mit einer Kraftstofffördereinheit der zuvor beschriebenen Art vorgeschlagen.

Ferner wird ein Fahrzeug mit einem solchen Kraftstofffördersystem vorgeschlagen, wobei das Fahrzeug als reines Verbrennungsfahrzeug oder als teilelektrisches Fahrzeug mit einem Verbrennungsmotor ausgebildet sein kann, welches zumindest zeitweise mit einem flüssigen Kraftstoff betreibbar ist.

Unter einem Fahrzeug ist dabei jede Art von Fahrzeug zu verstehen, welches zum Betrieb mit einem flüssigen Kraftstoff versorgt werden muss, insbesondere aber Personenkraftwagen und/oder Nutzfahrzeuge.

Im Weiteren wird die Erfindung unter Bezugnahme auf Figurendarstellungen im Einzelnen erläutert. Aus den Unteransprüchen und der nachfolgend detaillierten Beschreibung von vorgeschlagenen Ausführungsformen ergeben sich weitere vorteilhafte Weiterbildungen der Erfindung. Hierzu zeigen:
- Fig.1: eine schematische Darstellung einer vorgeschlagenen, ersten Ausgestaltung einer Kraftstofffördereinheit,
- Fig.2: eine schematische Darstellung einer vorgeschlagenen, zweiten Ausgestaltung einer Kraftstofffördereinheit,
- Fig.3a: eine erste perspektivische Ansicht einer vorgeschlagenen Kraftstofffördereinheit,
- Fig.3b: die in Fig.3a gezeigte Kraftstofffördereinheit in einer zweiten perspektivischen Ansicht,
- Fig.4a: eine erste perspektivische Ansicht einer den Flansch der in Fig.3 (Fig.3a und Fig.3b) gezeigten Kraftstofffördereinheit umfassenden Baugruppe,
- Fig.4b: die in der Fig.4a gezeigte Baugruppe in einer zweiten perspektivischen Ansicht,
- Fig.5a: eine perspektivische Ansicht des Flansches der in Fig.4 (Fig.4a und Fig.4b) gezeigten Baugruppe,
- Fig.5b: eine Draufsicht des in Fig.5a gezeigten Flansches,
- Fig.5c: eine Schnittansicht des in Fig.5b gezeigten Flansches entlang der Schnittlinie A - A und
- Fig.5d: eine vergrößerte Darstellung des in Fig.5c markierten Bereiches Z.

Gleiche oder gleichwirkende Merkmale sind über alle Figuren hinweg mit denselben Bezugszeichen gekennzeichnet.

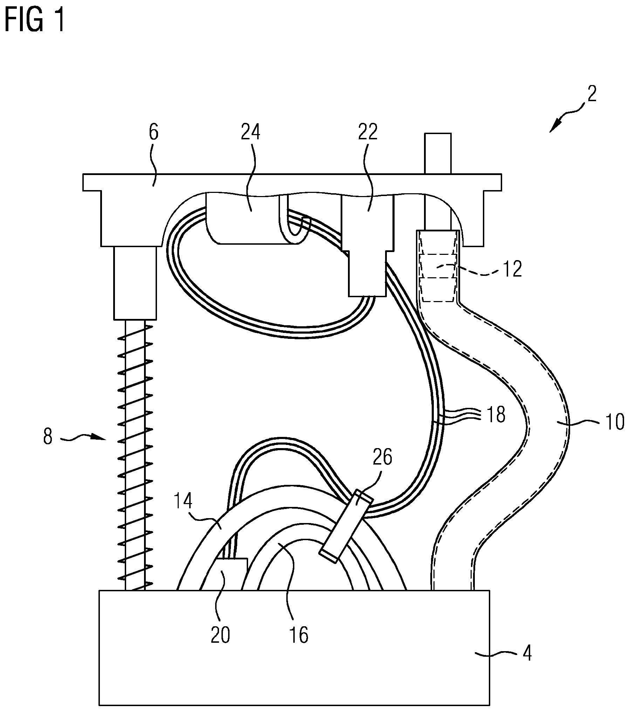

Die Kraftstofffördereinheit 2 nach Fig.1 umfasst einen - zu einer ersten Baugruppe gehörenden - Schwalltopf 4 und einen - zu einer zweiten Baugruppe gehörenden - Flansch 6, der gegenüber dem Schwalltopf 4 über z.B. zwei Abstützelemente 8 federnd vorgespannt ist, wobei nur eines der beiden Abstützelemente 8 veranschaulicht ist. Während sowohl der Schwalltopf 4 als auch der Flansch 6 aus Kosten- und Gewichtsgründen zweckmäßigerweise aus einem Kunststoff gespritzt sind, kann das jeweilige Abstützelement 8 einen von einer Feder umgebenen Metallstab oder Kunststoffstab umfassen, der als solcher mit dem Schwalltopf 4 und dem Flansch 6 gefügt ist und zugleich eine Verankerung zwischen dem Schwalltopf 4 und dem Flansch 6 bildet. Anstelle des Metallstabs oder Kunststoffstabs kann auch ein Metallrohr oder Kunststoffrohr vorgesehen sein.

Im Schwalltopf 4 ist eine Kraftstoffpumpe angeordnet, welche einen flüssigen Kraftstoff aus dem Schwalltopf 4 über einen Druckregler und/oder einen Kraftstofffeinfilter, welcher bzw. welche in Strömungsrichtung des Kraftstoffes hinter der Kraftstoffpumpe angeordnet ist bzw. sind, in eine flexible Vorlaufleitung 10 fördert und über welche der Kraftstoff weiter zu einem Verbrennungsmotor fließt. Von einem Bereich des Schwalltopfes 4 erstreckt sich dabei die Vorlaufleitung 10 von einem am Druckregler oder Kraftstofffeinfilter angeformten Anschlussstutzen bis zu einem am Flansch 6 angeformten Anschlussstutzen 12. Von einem Bereich des Schwalltopfes 4 erstreckt sich ferner ein Kabelbaum 18 bis zum Flansch 6, wobei der Kabelbaum 18 die Kraftstoffpumpe mit flanschseitigen, elektrischen Kontakten verbindet. Der Kabelbaum 18 ist dabei einerseits mittels eines Pumpensteckers 20 an der Kraftstoffpumpe und andererseits mittels eines Flanschsteckers 22 am Flansch 6 eingesteckt. Die Verwendung solcher Stecker ist jedoch nicht erfindungswesentlich. Vielmehr können diese elektrischen Verbindungen auch anders, so z.B. mittels sog. Schraubklemmen und dergleichen mehr realisiert sein. Der Kabelbaum 18 umfasst dabei je nach Pumpentyp zwei oder drei Stromleitungen (U, V, W) und ggf. eine hier nicht dargestellte Masseleitung bzw. Erdungsleitung zur Versorgung eines zweiphasigen oder dreiphasigen, elektronisch kommutierten Gleichstrommotors oder Wechselstrommotors.

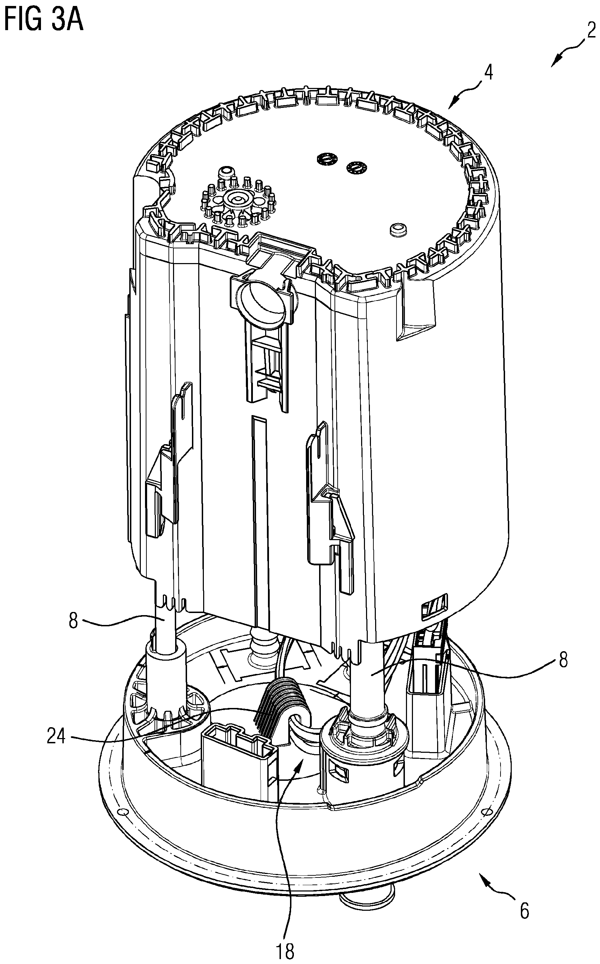

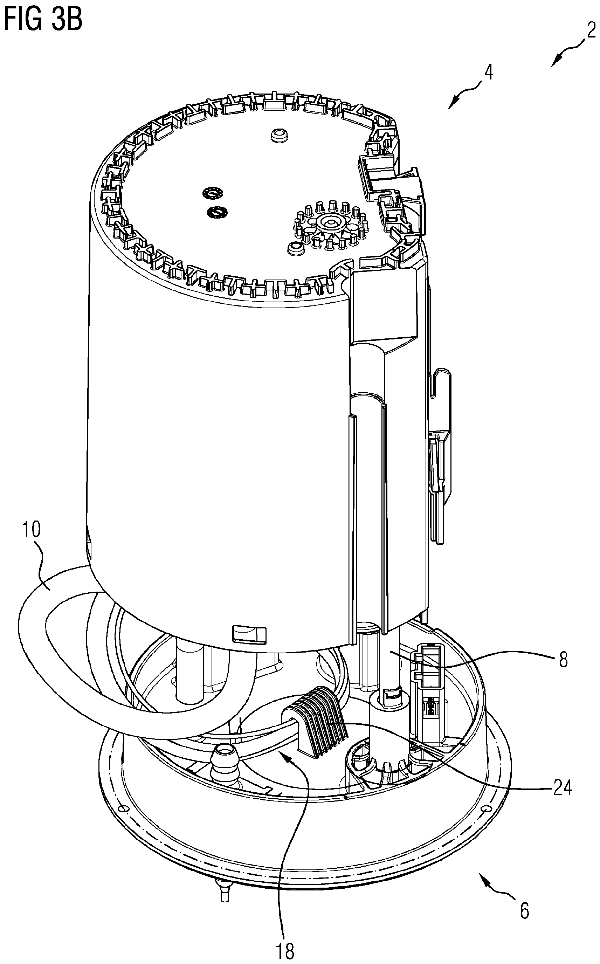

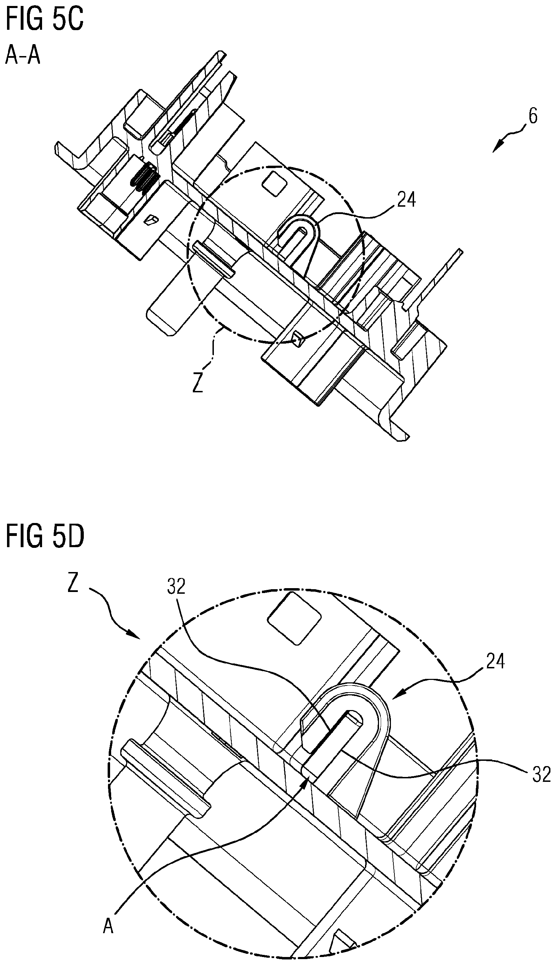

Nach der Fig.1 wird eine z.B. hakenförmige Kunststoffhalterung 24 am Flansch 6 zur flanschseitigen Fixierung des Kabelbaums 18 vorgesehen. Die Kunststoffhalterung 24 kann dabei in den Flansch 6 klemmend eingesteckt oder am Flansch 6 durch eine entsprechende Umspritzung angeformt sein. Die Kunststoffhalterung kann dabei grundsätzlich ein offenes oder geschlossenes Profil aufweisen. Beim geschlossenen Profil ist dabei nur sicherzustellen, dass der Pumpenstecker 20 - sofern ein solcher Pumpenstecker verwendet wird - durch das Profil hindurchführbar ist. Die Kunststoffhalterung 24 ist dabei zumindest abschnittsweise so eng ausgeführt, dass sich der Kabelbaum 18 in einer entsprechenden Aufnahme A (vgl.Fig.5d) klemmend fixieren lässt (siehe Fig.3, Fig.4 und Fig.5) . Von dieser Aufnahme A ist der Kabelbaum 18 nach unten zur Kraftstoffpumpe geführt.

Schwalltopfseitig hingegen ist der Kabelbaum 18 mittels eines losen Verbindungselements, z.B. in Gestalt eines Kabelbinders 26 - aus Kunststoff oder Metall - gegenüber einer flexiblen Kraftstoffleitung 14 und einer flexiblen Kraftstoffleitung 16 fixiert. Dabei verbindet die Kraftstoffleitung 14 die Kraftstoffpumpe mit dem Druckregler oder Kraftstofffeinfilter, wohingegen die Kraftstoffleitung 16 die Kraftstoffpumpe mit einer Saugstrahlpumpe verbindet, die in Strömungsrichtung des Kraftstoffes hinter der Kraftstoffpumpe angeordnet ist. Zumindest aber erfolgt die Fixierung des Kabelbaums 18 gegenüber einer dieser beiden Kraftstoffleitungen 14, 16.

Ein solcher Kabelbinder stellt ein universell einsetzbares und preisgünstiges Verbindungselement dar. Alternativ zum Kabelbinder ließen sich auch andere lose Verbindungselemente vorsehen, die sich für eine solch schwalltopfseitige Fixierung des Kabelbaums 18 eignen, etwa eine Kunststoffschelle oder Metallschelle und dergleichen mehr.

Grundsätzlich kann auch zur flanschseitigen Fixierung des Kabelbaums 18 ein loses Verbindungselement der zuvor beschriebenen Art verwendet werden, sofern am Flansch 6 eine entsprechende Befestigungsmöglichkeit vorgesehen wird, etwa in Gestalt eines offenen oder geschlossenen Profils oder aber in Gestalt von Aussparungen im Flansch 6, durch die ein solch loses Verbindungselement, wie etwa ein Kabelbinder, eine Verbindungsschelle aus Kunststoff oder Metall und dergleichen mehr zur Befestigung hindurchführbar ist.

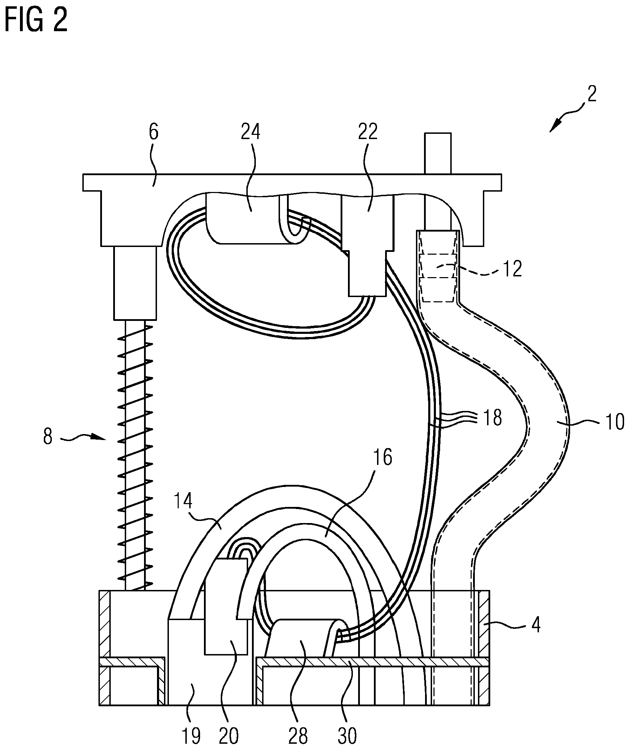

Im Unterschied zur Fig.1 sieht die Kraftstofffördereinheit 2 nach Fig.2 eine z.B. hakenförmige Kunststoffhalterung 28 an einem die Kraftstoffpumpe 19 aufnehmenden Pumpenhalter 30 innerhalb des Schwalltopfes 4 vor. Der Pumpenhalter 30 kann dabei mit dem Schwalltopf 4 gefügt oder einteilig mit dem Schwalltopf 4 verspritzt sein. Auch dabei gilt, dass eine solche Kunststoff halterung grundsätzlich ein offenes oder geschlossenes Profil aufweisen kann, solange nur beim geschlossenen Profil sichergestellt ist, dass der Pumpenstecker 20 - sofern ein solcher Pumpenstecker verwendet wird - durch das Profil hindurchführbar ist. Die Kunststoffhalterung 28 kann dabei in den Pumpenhalter 30 klemmend eingesteckt oder am Pumpenhalter 30 durch eine entsprechende Umspritzung angeformt sein.

Anstelle der hakenförmigen Kunststoffhalterung am Pumpenhalter (gemäß Fig.2) kann auch lediglich ein loses Verbindungselement der zuvor beschriebenen Art vorgesehen sein (analog zur Fig.l), sofern am Pumpenhalter eine entsprechende Befestigungsmöglichkeit vorgesehen wird, etwa in Gestalt eines offenen oder geschlossenen Profils oder aber in Gestalt von Aussparungen, durch die ein solch loses Verbindungselement, wie etwa ein Kabelbinder aus Kunststoff oder Metall und dergleichen mehr zur Befestigung hindurchführbar ist. Der Pumpenhalter 30 ist dabei nur beispielhaft für eine mögliche Stelle zur Fixierung im Bereich des Schwalltopfes 4 zu verstehen. Genauso gut könnte der Kabelbaum 18 auch direkt an der Wandung des Schwalltopfes 4 fixiert sein.

Nach einer weiteren - durch die Figuren nicht veranschaulichten - Ausführungsform kann der Kabelbaum schwalltopfseitig einerseits - analog zur Fig.1 - mittels eines losen Verbindungselements gegenüber zumindest einer der beiden flexiblen Kraftstoffleitungen 14, 16, vorzugsweise aber gegenüber beiden Kraftstoffleitungen 14, 16 klemmend fixiert sein und andererseits auch direkt oder indirekt am Schwalltopf 4, bspw. am Pumpenhalter analog zur Fig.2. Dadurch lässt sich eine infolge eines Fahrzeugaufpralls entstehende und auf die Kraftstofffördereinheit wirkende kinetische Energie schwalltopfseitig gestuft aufnehmen und abbauen.

Es sei an dieser Stelle ausdrücklich klargestellt, dass unter den zuvor beschriebenen Krafteinleitungspunkten bzw. den die Krafteinleitungspunkte bildenden Haltemitteln solche zu verstehen sind, die zwischen den elektrischen Anschlüssen des Kabelbaums liegen und somit separate Krafteinleitungspunkte bzw. Haltemittel bilden. Zumindest aber liegt ein solch separater Krafteinleitungspunkt bzw. ein solches separates Haltemittel zwischen den elektrischen Anschlüssen des Kabelbaums.

Nach einer weiteren Ausführungsform können bereits die elektrischen Anschlüsse des Kabelbaums so ausgebildet sein, dass sie im Sinne der zuvor beschriebenen Krafteinleitungspunkte bzw. Haltemittel fungieren.

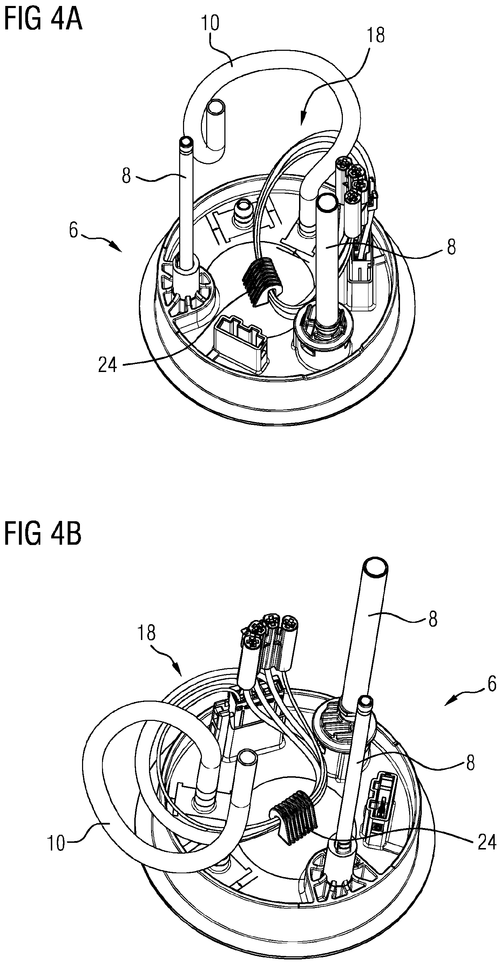

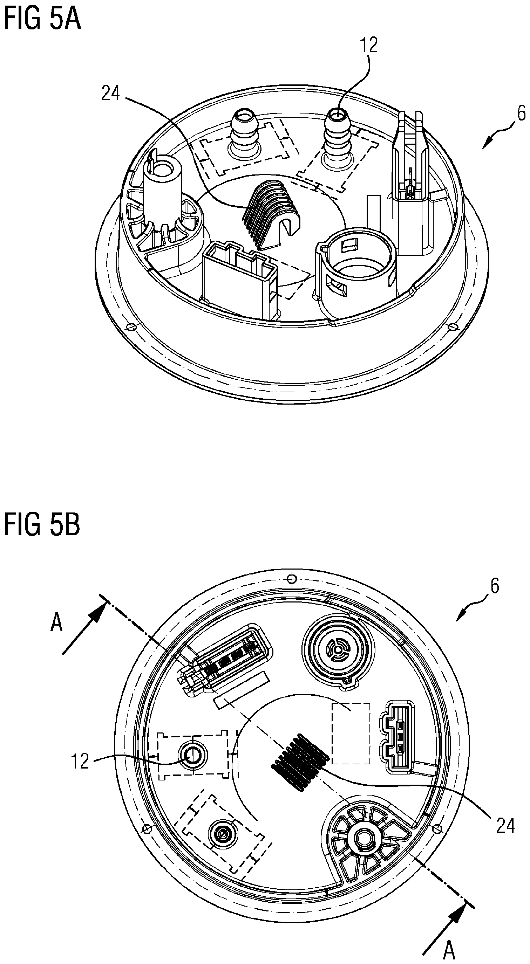

Die Fig.3 (Fig.3a, Fig.3b), Fig.4 (Fig.4a, Fig.4b), und Fig.5 (Fig.5a bis Fig.5d) veranschaulichen eine beispielhafte Ausbildung einer am Flansch 6 angeordneten hakenförmigen Kunststoffhalterung 24, die eine derart enge Aufnahme A (siehe Fig.5d) für den Kabelbaum 18 bildet, dass sich der Kabelbaum 18 entsprechend klemmend fixieren lässt. Die Fig.5c und Fig.5d veranschaulichen dabei eine Schnittdarstellung durch den Flansch 6 und die Kunststoffhalterung 24 entlang der Schnittlinie A - A, wobei der Schnitt in etwa mittig durch die Kunststoffhalterung 24 verläuft. Zu sehen sind dabei zwei vorspringende und einander gegenüberliegende Klemmrippen 32 der Aufnahme A, welche die klemmende Fixierung des Kabelbaums 18 bewirken (siehe Fig.5d).

Allen zuvor beschriebenen Ausführungsformen liegt dabei folgende Kraftaufnahmewirkung zugrunde:
Das flanschseitige und das schwalltopfseitige Haltemittel 24, 26, 28 bilden in Verbindung mit dem Kabelbaum 18 eine Art Kraftaufnahmevorrichtung zum Schutz der Vorlaufleitung 10 und des Anschlussstutzens 12 bei einem Fahrzeugaufprall, bei dem sich ein Kraftstofftank aufgrund einer in ihn eingebrachten kinetischen Energie bis zur in ihm untergebrachten Kraftstofffördereinheit 2 so stark verformt, dass sich die Verankerung zwischen dem Schwalltopf 4 und dem Flansch 6 löst. Der Schwalltopf 4 und der Flansch 6 bewegen sich dabei voneinander weg.

Die fixierend wirkenden Haltemittel 24, 26, 28 definieren dabei eine sich zwischen ihnen erstreckende Kabelbaumlänge, die gegenüber der Länge der Vorlaufleitung 10 kürzer ist, so dass beim zuvor beschriebenen Szenario, bei dem sich der Schwalltopf 4 und der Flansch 6 voneinander wegbewegen, die Kabelbaumlänge zwischen den Haltemitteln 24, 26, 28 unter Zug stellbar ist, um eine auf die Kraftstofffördereinheit 2 wirkende kinetische Energie aufzunehmen und dadurch abzubauen, ohne dass die Vorlaufleitung 10 oder der mit ihr verbundene Anschlussstutzen 12 am Flansch 6 abreißt.

Die Vorlaufleitung 10 bleibt dabei vielmehr kraftlos gestellt oder es zumindest sichergestellt, dass selbst nach einem Abriss mindestens eines der Haltemittel 24, 26, 28 die Vorlaufleitung unter Zug stellbar ist, ohne dass sie oder der mit ihr verbundene Anschlussstutzen 12 am Flansch 6 abreißt, weil die kinetische Energie soweit abgebaut ist, als dass die verbleibende kinetische Energie dafür nicht mehr ausreicht.

Somit lässt sich eine bei einem Fahrzeugaufprall entstehende und auf die Kraftstofffördereinheit wirkende kinetische Energie bis zu einer gewissen Grenze aufnehmen und abbauen, wobei diese Grenze von einer Zugfestigkeit der Haltemittel sowie des Kabelbaums abhängig ist.

## Patentansprüche

1. Kraftstofffördereinheit (2) zur Verwendung innerhalb eines Kraftstofftanks eines Fahrzeugs, aufweisend:
- einen Schwalltopf (4) zur Anordnung an einer Wandung des Kraftstofftanks, wobei im Schwalltopf (4) eine Kraftstoffpumpe zur Förderung eines flüssigen Kraftstoffes aus dem Schwalltopf (4) angeordnet ist,
- einen Flansch (6) zur Anordnung in einer Öffnung des Kraftstofftanks,
- mindestens ein zwischen dem Schwalltopf (4) und dem Flansch (6) angeordnetes Abstützelement (8),
- eine flexible, als Vorlaufleitung (10) fungierende Kraftstoffleitung, welche sich vom einem Bereich des Schwalltopfs (4) bis zu einem Anschlussstutzen (12) am Flansch (6) erstreckt,
- einen Kabelbaum (18), welcher sich von der Kraftstoffpumpe bis zum Flansch (6) erstreckt, **dadurch gekennzeichnet, dass** die Kraftstofffördereinheit ferner aufweist :
- mindestens ein flanschseitiges, einen ersten Krafteinleitungspunkt bildendes Haltemittel (24) zur flanschseitigen Fixierung des Kabelbaums (18) sowie
- mindestens ein schwalltopfseitiges, einen zweiten Krafteinleitungspunkt bildendes Haltemittel (26, 28) zur schwalltopfseitigen Fixierung des Kabelbaums (18),
wobei das flanschseitige und das schwalltopfseitige Haltemittel (24, 26, 28) in Verbindung mit dem Kabelbaum (18) eine Kraftaufnahmevorrichtung zum Schutz der Vorlaufleitung (10) und des Anschlussstutzens (12) bei einem Fahrzeugaufprall bilden, wobei die Kabelbaumlänge zwischen den Haltemitteln (24, 26, 28) gegenüber der Länge der Vorlaufleitung (10) kürzer ist, so dass beim Fahrzeugaufprall, durch den sich der Schwalltopf (4) und der Flansch (6) voneinander wegbewegen, die Kabelbaumlänge zwischen den Haltemitteln (24, 26, 28) unter Zug stellbar ist, um eine auf die Kraftstofffördereinheit (2) wirkende kinetische Energie aufzunehmen und dadurch abzubauen, ohne dass die Vorlaufleitung (10) oder der mit ihr verbundene Anschlussstutzen (12) am Flansch (6) abreißt.

2. Kraftstofffördereinheit (2) nach Anspruch 1, wobei das flanschseitige und/oder das schwalltopf seitige Haltemittel (24, 26, 28) zwischen den elektrischen Anschlüssen des Kabelbaums (18) liegen.

3. Kraftstofffördereinheit (2) nach Anspruch 1 oder 2, wobei schwalltopfseitig ein Haltemittel (22) fest am Schwalltopf (4) und/oder in einem Bereich des Schwalltopfes in Gestalt zumindest eines losen Verbindungselements zwischen dem Kabelbaum (16) und zumindest einer weiteren Kraftstoffleitung (14, 16) angebracht ist.

4. Kraftstofffördereinheit (2) nach Anspruch 3, wobei das lose Verbindungselement zwischen dem Kabelbaum (16) und einer ersten und zweiten Kraftstoffleitung (14, 16) angebracht ist, wobei die erste Kraftstoffleitung (14) die Kraftstoffpumpe mit einem Druckregler oder einem Kraftstofffeinfilter verbindet und wobei die zweite Kraftstoffleitung (16) die Kraftstoffpumpe mit einer Saugstrahlpumpe verbindet.

5. Kraftstofffördereinheit (2) nach einem der Ansprüche 1 bis 4, wobei flanschseitig ein Haltemittel (24) fest am Flansch (6) angebracht ist.

6. Kraftstofffördereinheit (2) nach einem der Ansprüche 3 bis 5, wobei das fest am Schwalltopf (4) angebrachte Haltemittel (28) und/oder das fest am Flansch (6) angebrachte Haltemittel (24) in Gestalt einer angeformten oder klemmend eingesetzten Halterung, insbesondere Kunststoffhalterung ausgebildet ist/sind.

7. Kraftstofffördereinheit (2) nach Anspruch 6, wobei die schwalltopfseitige Halterung an einer Wandung des Schwalltopfes (4) oder in einem Bereich des Schwalltopfes (4)an einem Pumpenhalter vorgesehen ist.

8. Kraftstofffördereinheit (2) nach einem der vorhergehenden Ansprüche 3 bis 7, wobei das lose Verbindungselement ein Kabelbinder ist.

9. Kraftstofffördereinheit (2) nach einem der vorhergehenden Ansprüche, wobei flanschseitig und/oder schwalltopfseitig zumindest zwei, je einen Krafteinleitungspunkt bildende Haltemittel (26, 28) zur gestuften Kraftaufnahme vorgesehen sind.

10. Kraftstofffördersystem mit einer Kraftstofffördereinheit (2) nach einem der vorhergehenden Ansprüche.

11. Fahrzeug mit einem Kraftstofffördersystem nach Anspruch 10 .

12. Fahrzeug nach Anspruch 11, wobei das Fahrzeug als reines Verbrennungsfahrzeug oder als teilelektrisches Fahrzeug ausgebildet ist, welches zumindest zeitweise mit einem flüssigen Kraftstoff betreibbar ist.

## Claims

1. Fuel delivery unit (2) for use within a fuel tank of a vehicle, having:
- a surge tank (4) for arranging on a wall of the fuel tank, wherein a fuel pump for delivering a liquid fuel from the surge tank (4) is arranged in the surge tank (4),
- a flange (6) for arranging in an opening of the fuel tank,
- at least one supporting element (8), which is arranged between the surge tank (4) and the flange (6),
- a flexible fuel line, which acts as a feed line (10) and extends from a region of the surge tank (4) to a connector stub (12) on the flange (6),
- a wiring harness (18), which extends from the fuel pump to the flange (6),
**characterized in that** the fuel delivery unit furthermore has:
- at least one flange-side holding means (24), which forms a first force application point for fixing the wiring harness (18) on the flange side, and
- at least one holding means (26, 28), which is on the surge tank side and forms a second force application point for fixing the wiring harness (18) on the surge tank side,
wherein, in conjunction with the wiring harness (18), the flange-side and the surge tank-side holding means (24, 26, 28) form a force absorbing device for protecting the feed line (10) and the connector stub (12) during a vehicle impact, wherein the wiring harness length between the holding means (24, 26, 28) is shorter than the length of the feed line (10), with the result that, during the vehicle impact, as a result of which the surge tank (4) and the flange (6) move away from one another, the wiring harness length between the holding means (24, 26, 28) can be subjected to a tensile load in order to absorb kinetic energy acting on the fuel delivery unit (2) and thereby to dissipate it without the feed line (10) or the connector stub (12) which is connected to it breaking off at the flange (6).

2. Fuel delivery unit (2) according to Claim 1, wherein the flange-side and/or the surge tank-side holding means (24, 26, 28) are/is situated between the electric terminals of the wiring harness (18).

3. Fuel delivery unit (2) according to Claim 1 or 2, wherein a holding means (22) is attached in a fixed manner on the surge tank side to the surge tank (4) and/or in a region of the surge tank in the form of at least one loose connecting element between the wiring harness (16) and at least one further fuel line (14, 16).

4. Fuel delivery unit (2) according to Claim 3, wherein the loose connecting element is attached between the wiring harness (16) and a first and second fuel line (14, 16), wherein the first fuel line (14) connects the fuel pump to a pressure regulator or to a fine fuel filter and wherein the second fuel line (16) connects the fuel pump to an ejector pump.

5. Fuel delivery unit (2) according to any of Claims 1 to 4, wherein a holding means (24) is attached in a fixed manner to the flange (6) on the flange side.

6. Fuel delivery unit (2) according to any of Claims 3 to 5, wherein the holding means (28) attached in a fixed manner to the surge tank (4), and/or the holding means (24) attached in a fixed manner to the flange (6) are/is in the form of a bracket, in particular a plastic bracket, moulded on or inserted with a clamping action.

7. Fuel delivery unit (2) according to Claim 6, wherein the surge tank-side bracket is provided on a wall of the surge tank (4) or in a region of the surge tank (4) on a pump holder.

8. Fuel delivery unit (2) according to any of Claims 3 to 7, wherein the loose connecting element is a cable tie.

9. Fuel delivery unit (2) according to any of the preceding claims, wherein at least two holding means (26, 28), each forming a force application point, are provided on the flange side and/or the surge tank side for force absorption in stages.

10. Fuel delivery system having a fuel delivery unit (2) according to any of the preceding claims.

11. Vehicle having a fuel delivery system according to Claim 10.

12. Vehicle according to Claim 11, wherein the vehicle is designed as a pure internal combustion vehicle or as a partially electric vehicle which can be operated at least temporarily with a liquid fuel.

## Revendications

1. Unité de transport de carburant (2) pour utilisation à l'intérieur d'un réservoir de carburant d'un véhicule, comprenant :
- une cuve de stabilisation (4) pour agencement sur une paroi du réservoir de carburant, une pompe à carburant étant agencée dans la cuve de stabilisation (4) pour le transport d'un carburant liquide à partir de la cuve de stabilisation (4),
- une bride (6) pour agencement dans une ouverture du réservoir de carburant,
- au moins un élément d'appui (8) agencé entre la cuve de stabilisation (4) et la bride (6),
- une conduite de carburant flexible, servant de conduite d'arrivée (10), qui s'étend d'une zone de la cuve de stabilisation (4) jusqu'à une tubulure de raccordement (12) sur la bride (6),
- un faisceau de câbles (18), qui s'étend de la pompe à carburant jusqu'à la bride (6), **caractérisée en ce que** l'unité de transport de carburant présente en outre :
- au moins un moyen de retenue (24) côté bride, formant un premier point d'introduction de force, pour la fixation côté bride du faisceau de câbles (18), et
- au moins un moyen de retenue (26, 28) côté cuve de stabilisation, formant un deuxième point d'introduction de force, pour la fixation côté cuve de stabilisation du faisceau de câbles (18),
les moyens de retenue (24, 26, 28) côté bride et côté cuve de stabilisation formant, en liaison avec le faisceau de câbles (18), un dispositif d'absorption de force pour la protection de la conduite d'arrivée (10) et de la tubulure de raccordement (12) lors d'un impact du véhicule, la longueur du faisceau de câbles entre les moyens de retenue (24, 26, 28) étant plus courte que la longueur de la conduite d'arrivée (10), de telle sorte que lors d'un impact du véhicule par lequel la cuve de stabilisation (4) et la bride (6) sont éloignées l'une de l'autre, la longueur du faisceau de câbles entre les moyens de retenue (24, 26, 28) peut être ajustée sous traction afin d'absorber une énergie cinétique agissant sur l'unité de transport de carburant (2) et de la dissiper sans que la conduite d'arrivée (10) ou la tubulure de raccordement (12) qui lui est reliée ne se détache de la bride (6).

2. Unité de transport de carburant (2) selon la revendication 1, dans laquelle les moyens de retenue (24, 26, 28) côté bride et/ou côté cuve de stabilisation sont situés entre les raccordements électriques du faisceau de câbles (18).

3. Unité de transport de carburant (2) selon la revendication 1 ou 2, dans laquelle un moyen de retenue (22) est disposé côté cuve de stabilisation de manière fixe sur la cuve de stabilisation (4) et/ou dans une zone de la cuve de stabilisation sous la forme d'au moins un élément de liaison lâche entre le faisceau de câbles (16) et au moins une autre conduite de carburant (14, 16).

4. Unité de transport de carburant (2) selon la revendication 3, dans laquelle l'élément de liaison lâche est disposé entre le faisceau de câbles (16) et une première et une deuxième conduite de carburant (14, 16), dans laquelle la première conduite de carburant (14) relie la pompe à carburant à un régulateur de pression ou à un filtre fin de carburant et dans laquelle la deuxième conduite de carburant (16) relie la pompe à carburant à une pompe à jet d'aspiration.

5. Unité de transport de carburant (2) selon l'une quelconque des revendications 1 à 4, dans laquelle un moyen de retenue (24) est disposé de manière fixe sur la bride (6) côté bride.

6. Unité de transport de carburant (2) selon l'une quelconque des revendications 3 à 5, dans laquelle le moyen de retenue (28) disposé de manière fixe sur la cuve de stabilisation (4) et/ou le moyen de retenue (24) disposé de manière fixe sur la bride (6) est/sont configuré(s) sous la forme d'une fixation moulée ou insérée par serrage, notamment d'une fixation en matière plastique.

7. Unité de transport de carburant (2) selon la revendication 6, dans laquelle la fixation côté cuve de stabilisation est prévue sur une paroi de la cuve de stabilisation (4) ou dans une zone de la cuve de stabilisation (4) sur un support de pompe.

8. Unité de transport de carburant (2) selon l'une quelconque des revendications 3 à 7 précédentes, dans laquelle l'élément de liaison lâche est un serre-câble.

9. Unité de transport de carburant (2) selon l'une quelconque des revendications précédentes, dans laquelle au moins deux moyens de retenue (26, 28), formant chacun un point d'introduction de force, sont prévus côté bride et/ou côté cuve de stabilisation pour l'absorption échelonnée de la force.

10. Système de transport de carburant comprenant une unité de transport de carburant (2) selon l'une quelconque des revendications précédentes.

11. Véhicule comprenant un système de transport de carburant selon la revendication 10.

12. Véhicule selon la revendication 11, dans lequel le véhicule est configuré comme un véhicule à combustion interne pur ou comme un véhicule partiellement électrique, qui peut fonctionner au moins temporairement avec un carburant liquide.
